# EUROPEAN PATENT APPLICATION

(11) **EP 4 782 828 A1**
(43) Date of publication of application: **29.07.2026**
(21) Application number: 26152365.8
(22) Date of filing: 16.01.2026
(51) Int. Cl.: G01N 29/04, G01N 29/06

(54) **METROLOGY AND INSPECTION APPARATUS FOR MATERIAL LAYER INCLUDING THREE-DIMENSIONAL NANOSTRUCTURES, METHOD OF MANUFACTURING SEMICONDUCTOR DEVICE USING THE SAME, AND METHOD OF PERFORMING METROLOGY AND INSPECTION**

(30) Priority: 24.01.2025 KR 20250011794
(71) Applicant: Samsung Electronics Co., Ltd., Suwon-si, Gyeonggi-do 16677 (KR)
(72) Inventor: HAN, Seunghoon, 16677 Suwon-si (KR); LEE, Hotaik, 16678 Suwon-si (KR); CHO, Choonlae, 16678 Suwon-si (KR); LEE, Jeongyub, 16678 Suwon-si (KR)
(74) Representative: Elkington and Fife LLP

(57) **Abstract**

A metrology and inspection apparatus for a material layer including a three-dimensional nanostructure, a method of manufacturing a semiconductor device using the same, and a method of performing a metrology and inspection are provided. The metrology and inspection apparatus according to an example embodiment includes a first ultrasonic transducer configured to emit ultrasonic waves to a metrology and inspection target, and a substrate holder that is spaced apart from the first ultrasonic transducer and includes a surface facing the first ultrasonic transducer, wherein the first ultrasonic transducer and the substrate holder are under a high-pressure gas atmosphere higher than atmospheric pressure.

## Description

### FIELD OF THE INVENTION

Example embodiments of the disclosure relate to a metrology and inspection apparatus, and more specifically, to a metrology and inspection apparatus for a material layer including a three-dimensional nanostructure, a method of manufacturing a semiconductor device using the same, and a method of performing metrology and inspection.

### BACKGROUND OF THE INVENTION

Three-dimensional (3D) nanostructures including air channels such as vertical through holes or horizontal slits may be formed as one-dimensional (1D) arrays or two-dimensional (2D) arrays when manufacturing a 3D dynamic random access memory (DRAM), VNAND memory cells, a high bandwidth memory (HBM), and stair free contact structures.

Measurement of an interface shape of 3D nanostructures having a high aspect ratio and detection of defects (e.g., voids, unetched portions, and bridges) at each manufacturing operation are important.

For such measurements and defect detection, technologies utilizing ultrasonic waves may be used such as, for example, a technology in which metrology and inspection are performed while immersing an ultrasonic transducer and a semiconductor chip to be measured in a liquid.

### SUMMARY OF THE INVENTION

One or more example embodiments provide a metrology and inspection apparatus that may increase the intensity of a metrology and inspection signal.

One or more example embodiments provide a metrology and inspection apparatus that may increase the resolution of an image acquired in metrology and inspection.

One or more example embodiments may provide a method of manufacturing a semiconductor device using such a metrology and inspection apparatus.

One or more example embodiments may provide a method of performing metrology and inspection using such a metrology and inspection apparatus.

According to an aspect of the disclosure, a metrology and inspection apparatus may include: a chamber; at least one first ultrasonic transducer configured to emit ultrasonic waves to a metrology and inspection target in the chamber; and a substrate holder in the chamber and spaced apart from all of the at least one first ultrasonic transducer, the substrate holder including a surface facing the at least one first ultrasonic transducer, wherein the surface is configured to have the metrology and inspection target thereon, wherein the chamber is configured to have therein a gas atmosphere having a pressure higher than atmospheric pressure while the at least one first ultrasonic transducer emits the ultrasonic waves to the metrology and inspection target in the chamber.

Proposed concepts relate to an ultrasonic metrology and inspection system for semiconductor material layers incorporating three-dimensional nanostructures such as high-aspect-ratio holes, slits and channels. A particular concept is to perform ultrasonic interrogation within a high-pressure gas environment, thereby reducing thermoviscous attenuation in nano-scale air channels and significantly increasing signal intensity and image resolution.

Proposed apparatus may provide a chamber capable of maintaining gas pressures substantially above atmospheric pressure, in which a substrate holder and one or more ultrasonic transducers are arranged at a controlled, spaced-apart distance. By exposing the transducer emission surface directly to the high-pressure gas atmosphere, embodiments may enhance coupling of ultrasonic energy into air-filled nanostructures. Configurations may include single transducers, multi-region arrangements, and one- or two-dimensional transducer arrays, and may also incorporate dedicated receiving transducers for oblique and vertical reflections.

Functionally, embodiments may operate by propagating tailored ultrasonic pulses-whose carrier frequency, pulse width, and incidence angle can be tuned in real time-into arrays of high-aspect-ratio features. Increased gas density reduces energy loss in narrow air channels, enabling deeper penetration, improved echo amplitude, and greater defect sensitivity. By adjusting transducer-substrate spacing to influence external resonant behaviour, the proposed system may further optimise measurement resolution. Path-changing members may also redirect beams to achieve desired oblique incidence or detection geometries, improving characterisation of both vertical and horizontal structures.

Technical effects provided by proposed embodiments may include higher SNR for reflections from deep or narrow features, enhanced detection of voids, unetched residues and other defects, and improved fidelity in imaging interface shapes within nanostructures. A proposed method may allow selective optimisation of vertical and lateral resolution by varying pulse envelopes, and may support high-throughput inspection via arrays or multi-region substrate holders. Operation under elevated pressure may also enable lower input power for transducers, reducing thermal load and facilitating integration into semiconductor manufacturing lines.

From a manufacturing perspective, the proposed apparatus may be suitable for in-line metrology during fabrication of VNAND, HBM, DRAM, and other devices incorporating dense vertical channels. A proposed inspection method supports adaptive process control, including correlation with TEG patterns at scribe lines to calibrate or refine measurements, potentially in combination with simulation or machine-learning-based inference. The proposed system's modularity-particularly in transducer placement, array configuration, and pressure/temperature control-may support integration with existing high-volume semiconductor toolsets and scalable inspection strategies for advanced 3D architectures.

An ultrasonic emission surface of the at least one first ultrasonic transducer may be configured to be exposed to the gas atmosphere inside the chamber.

The metrology and inspection apparatus may further include: a second ultrasonic transducer and a third ultrasonic transducer, wherein the second ultrasonic transducer and the third ultrasonic transducer may be configured to receive ultrasonic waves reflected from the metrology and inspection target.

The at least one first ultrasonic transducer is a plurality of first ultrasonic transducers.

The plurality of first ultrasonic transducers may be arranged in a one-dimensional or two-dimensional transducer array.

The substrate holder may include a plurality of regions, each of the plurality of regions configured to have a respective substrate loaded thereon, and the plurality of first ultrasonic transducers may face the plurality of regions, respectively.

The metrology and inspection apparatus may further include a gas supply source configured to supply a gas to the chamber to maintain a pressure inside the chamber at the pressure higher than atmospheric pressure.

The metrology inspection apparatus may further include an exhaust configured to exhaust the gas supplied to the chamber to an outside of the chamber.

The metrology inspection apparatus may further include a temperature controller configured to maintain an internal temperature of the chamber at a set temperature while metrology and inspection is being performed on the metrology and inspection target in the chamber.

The gas of the gas supply source includes at least one from among nitrogen (N₂), oxygen (O₂), and hydrogen (H₂).

The at least one first ultrasonic transducer may be in a wall of the chamber, the wall facing the substrate holder.

The metrology inspection apparatus may further include a second ultrasonic transducer and a third ultrasonic transducer, wherein the second ultrasonic transducer and the third ultrasonic transducer may be configured to receive ultrasonic waves reflected from the metrology and inspection target, and wherein the second ultrasonic transducer and the third ultrasonic transducer may be in the wall of the chamber.

The at least one first ultrasonic transducer, the second ultrasonic transducer, and the third ultrasonic transducer may be at a same height as each other, and at least one from among the at least one first ultrasonic transducer, the second ultrasonic transducer, and the third ultrasonic transducer may include a path changer configured to change a path of the ultrasonic waves emitted or received by the at least one from among the at least one first ultrasonic transducer, the second ultrasonic transducer, and the third ultrasonic transducer.

According to an aspect of the disclosure, a method of manufacturing a semiconductor device may include: forming a material layer on a substrate, the material layer including a three-dimensional nanostructure; loading the substrate, on which the material layer is formed, onto a region of a substrate holder of a metrology and inspection apparatus; performing, while the substrate holder faces towards a first ultrasonic transducer of the metrology and inspection apparatus and the substrate holder is in a gas atmosphere having a pressure higher than atmospheric pressure, a metrology and inspection on the material layer by emitting ultrasonic waves from the first ultrasonic transducer to the material layer; unloading the substrate from the metrology and inspection apparatus after the metrology and inspection; and performing a subsequent process on the material layer.

The forming the material layer may include: forming a plurality of patterns on the substrate; forming an interlayer insulating layer on the plurality of patterns; and forming a three-dimensional nanostructure by removing a portion of the interlayer insulating layer such that a portion of the plurality of patterns is exposed.

The performing the metrology and inspection may include: changing a carrier frequency of the ultrasonic waves emitted onto the material layer; and changing a distance between the first ultrasonic transducer and the material layer.

According to an aspect of the disclosure, a method of performing metrology and inspection may include: radiating ultrasonic waves to a metrology and inspection target while the metrology and inspection target is in an atmosphere having a pressure higher than atmospheric pressure; and receiving the ultrasonic waves reflected from the metrology and inspection target while the metrology and inspection target is in the atmosphere.

The radiating the ultrasonic waves may include: changing a carrier frequency of the ultrasonic waves; and changing a distance between an emission surface and the metrology and inspection target, wherein the emission surface is configured to emit the ultrasonic waves.

The radiating the ultrasonic waves may include radiating an ultrasonic pulse, and the radiating the ultrasonic pulse may include changing a width of the ultrasonic pulse according to a purpose of the metrology and inspection.

The radiating the ultrasonic pulse may include: radiating a first ultrasonic pulse to the metrology and inspection target for metrology and inspection of a horizontal structure of the metrology and inspection target; and radiating a second ultrasonic pulse to the metrology and inspection target for metrology and inspection of a vertical structure of the metrology and inspection target, wherein a shape of the first ultrasonic pulse may differ from a shape of the second ultrasonic pulse.

Additional aspects will be set forth in part in the description which follows and, in part, will be apparent from the description, or may be learned by practice of the presented example embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a cross-sectional view showing an ultrasonic measurement system for metrology and inspection of a material layer including a three-dimensional (3D) nanostructure, according to an example embodiment;
FIG. 2 is a plan view of FIG. 1;
FIG. 3 is a plan view showing an example of a case when a planar shape of a transducer of FIG. 2 is circular;
FIG. 4 is a plan view showing an example of a case when an arrangement of a transducer, a gas inlet, and a gas outlet are different from those in FIGS. 1 to 3;
FIG. 5 is a plan view of a substrate holder of FIG. 1;
FIG. 6 is a plan view showing an arrangement relationship between a transducer, a gas inlet, and a gas outlet when the substrate holder of FIG. 1 includes a configuration shown in FIG. 5;
FIG. 7 is a cross-sectional view taken along a line 7-7' of FIG. 6;
FIG. 8 is a plan view showing a case when the substrate holder of FIG. 1 includes first to fourth regions shown in FIG. 5, and first to fourth transducers are provided corresponding to the first to fourth regions;
FIG. 9 is a cross-sectional view taken along a line 9-9' of FIG. 8;
FIG. 10 is a plan view showing a case when a transducer array is provided instead of the transducer in FIG. 1;
FIG. 11 is a cross-sectional view taken along a line 11-11' of FIG. 10;
FIG. 12 is a plan view showing a case when a two-dimensional transducer array is provided instead of a one-dimensional transducer array of FIG. 10;
FIG. 13, FIG. 14, FIG. 15, and FIG. 16 are cross-sectional views showing various examples of the first region of FIG. 1, and are various examples of arrangement forms of ultrasonic transducers;
FIG. 17 is a cross-sectional view illustrating an ultrasonic measurement system for metrology and inspection of a three-dimensional nanostructure including a pattern with a high aspect ratio, according to an example embodiment;
FIG. 18A is a cross-sectional view illustrating an example of a configuration of a transducer group of FIG. 17;
FIG. 18B is a diagram showing an example in which an ultrasonic path changing member is arranged between a transducer and a material layer that is a metrology and inspection target in FIG. 18A;
FIG. 18C is a diagram showing an example in which an ultrasonic path changing member is arranged between a transducer and a material layer that is a metrology and inspection target when transducers of a transducer group are arranged as shown in FIG. 17;
FIG. 19 is a cross-sectional view illustrating an ultrasonic measurement system for metrology and inspection of a 3D nanostructure including a pattern with a high aspect ratio, according to an example embodiment;
FIG. 20 is a cross-sectional view illustrating an ultrasonic measurement system for metrology and inspection of a 3D nanostructure including a pattern with a high aspect ratio, according to an example embodiment;
FIG. 21 is a cross-sectional view illustrating an example of a pattern having a 3D nanostructure among patterns having a high aspect ratio included in a material layer that is a metrology and inspection target, and a plurality of holes, that is, a plurality of air channels, formed in the material layer;
FIG. 22 is a plan view of FIG. 21;
FIG. 23 is a plan view showing a case when a unit alignment form including an element region and a through hole is different from that of FIG. 22;
FIG. 24 is a perspective view showing an example of a 3D nanostructure having a high aspect ratio included in a material layer that is a metrology and inspection target;
FIG. 25 is a perspective view showing an example of unevenness on a side of an element formation region in FIG. 24;
FIG. 26 is a plan view showing an example of a material layer that is a metrology and inspection target; and
FIG. 27 is a flowchart showing a method of manufacturing a semiconductor device using an ultrasonic metrology and inspection system according to an example embodiment.

### DETAILED DESCRIPTION

Reference will now be made in detail to non-limiting example embodiments of the disclosure, examples of which are illustrated in the accompanying drawings, wherein like reference numerals refer to like elements throughout. In this regard, embodiments of the disclosure may have different forms and should not be construed as being limited to the descriptions set forth herein. Accordingly, the example embodiments are merely described below, by referring to the figures, to explain non-limiting example aspects of the disclosure. As used herein, the term "and/or" includes any and all combinations of one or more of the associated listed items. Expressions such as "at least one of," when preceding a list of elements, modify the entire list of elements and do not modify the individual elements of the list.

Hereinafter, a metrology and inspection apparatus for a material layer including a three-dimensional (3D) nanostructure according to an example embodiment, a method of manufacturing a semiconductor device using the same, and a method of performing metrology and inspection are described in detail with reference to the accompanying drawings. In the drawings, thicknesses of layers and regions may be exaggerated for clarification of the specification.

The embodiments of the present disclosure are capable of various modifications and may be embodied in many different forms. When an element or layer is referred to as being "on" or "above" another element or layer in a layer structure described below, the element or layer may be directly on another element or layer or intervening elements or layers. In the following descriptions, like reference numerals in each drawings indicate like elements.

The singular forms include the plural forms unless the context clearly indicates otherwise. In addition, when a part "comprises" or "includes" an element in the specification, unless otherwise defined, it is not excluding other elements and may further include other elements.

The term "above" and similar directional terms may be applied to both singular and plural. With respect to operations that constitute a method, the operations may be performed in any appropriate sequence unless the context clearly indicates otherwise. The operations may not necessarily be performed in the described order of sequence.

Also, in the specification, the term "units" or "...modules" denote units or modules that process at least one function or operation, and may be realized by hardware, software, or a combination of hardware and software.

Also, the connections of lines and connection members between constituent elements depicted in the drawings are examples of functional connection and/or physical or circuitry connections, and thus, in practical devices, may be expressed as replaceable or additional functional connections, physical connections, or circuitry connections.

All examples and example terms are simply used to explain in detail example aspects of the disclosure, and thus, the scope of the disclosure is not limited by the examples or the example terms.

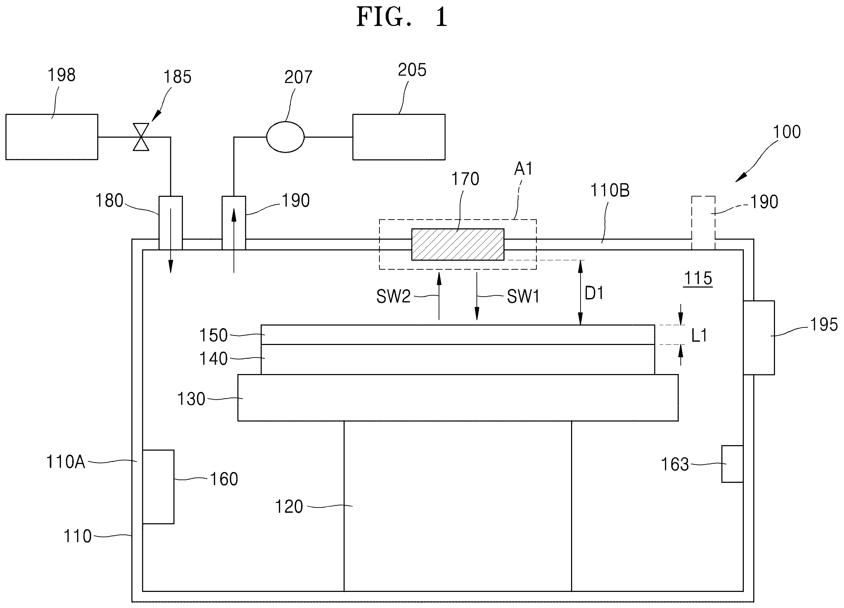

FIG. 1 is a cross-sectional view showing an ultrasonic measurement system (hereinafter, a first measurement system 100) for metrology and inspection of a material layer including a three-dimensional (3D) nanostructure according to an example embodiment. The first measurement system 100 may be expressed as an apparatus for metrology and inspection. Other measurement systems described below may also be expressed in the same manner.

Referring to FIG. 1, the first measurement system 100 may include a first chamber 110. The first chamber 110 may include a side wall 110A, having a given thickness, and an upper plate 110B. The upper plate 110B and the side wall 110A may be a single body connected as one, or the upper plate 110B and the side wall 110A may be connected or joined to each other through a fastening device or fastening means. In one example, the upper plate 110B may be attached to the side wall 110A in a structure that may be opened and closed by, for example, a lid or cover. Pressure of an inside 115 of the first chamber 110 may be higher than atmospheric pressure. In one example, the pressure of the inside 115 of the first chamber 110 may be higher than atmospheric pressure (1 atm) and less than or equal to 20 atm, 3 atm to 30 atm, 5 atm to 25 atm, 7 atm to 20 atm, or 9 atm to 15 atm, but is not limited thereto. A case of the first chamber 110, including the upper plate 110B, the side wall 110A, and a bottom plate, may be configured to sufficiently withstand the high pressure of the inside 115 of the first chamber 110 while maintaining a sealing property. The case of the first chamber 110 may also be expressed as a housing.

The first chamber 110 may include a chuck 120 and a substrate holder 130 provided on the chuck 120 within the inside 115, but is not limited thereto, and other elements may further be provided within the inside 115. The chuck 120 may be provided on the bottom of the first chamber 110, in the first chamber 110. The chuck 120 may be a support or a supporter for supporting the substrate holder 130. In one example, the chuck 120 may be fixed to the bottom of the first chamber 110. In one example, the chuck 120 may include a driving device (e.g., a motor) that causes rotation and/or straight-line reciprocating motion for the substrate holder 130. The substrate holder 130 may be provided on the top of the chuck 120. If the top of the chuck 120 includes an upper surface, the substrate holder 130 may be provided to cover a part or all of the upper surface of the chuck 120. The substrate holder 130 may be provided to be fixed to the chuck 120, or may be provided to enable rotation or straight-line reciprocating motion. The substrate holder 130 may include a holding means capable of firmly holding a substrate 140 loaded on an upper surface of the substrate holder 130. Due to the holding means, the substrate 140 loaded onto the substrate holder 130 may be fixed to the substrate holder 130 and may be fixed to the substrate holder 130 without shaking during the rotational movement or straight-line reciprocating movement of the substrate holder 130. The substrate 140 may include a semiconductor substrate, but is not limited thereto. In one example, the substrate 140 may include a non-semiconductor substrate. A material layer 150 may be a metrology and inspection target using ultrasonic waves and may include a 3D nanostructure. In one example, the 3D nanostructure may include a semiconductor element, an optical element, a high aspect ratio element, and a high aspect ratio pattern. In one example, the material layer 150 may include a layer structure in which a plurality of layers are stacked, and each layer of the plurality of layers may include a semiconductor element, an optical element, a memory element, etc., as a 3D nanostructure, but is not limited thereto. In one example, a pattern having a high aspect ratio may include vertical through holes and/or slits or trenches formed in a horizontal direction. This will be described later. The material layer 150 may have a first thickness L1.

A temperature control unit 160 (e.g., a temperature controller) may be provided inside the first chamber 110 to control the temperature of the inside 115 of the first chamber 110. The temperature control unit 160 may be provided on the side wall 110A of the first chamber 110, but may also be provided at other locations. For example, the temperature control unit 160 may be provided on an outer surface of the chuck 120. For example, the temperature control unit 160 may be provided under the upper plate 110B. In one example, the temperature control unit 160 may be provided at an appropriate location inside or outside the first chamber 110. In one example, the first measurement system 100 may further include a second temperature control unit (e.g., a second temperature controller) in addition to the temperature control unit 160. That is, the first measurement system 100 may include two or more temperature control units (e.g., temperature controllers). The temperature control unit 160 may include a sensor for detecting the temperature and temperature change of the inside 115 of the first chamber 110. In addition, the temperature control unit 160 may include a device (e.g., a heater) for increasing the temperature of the inside 115, and may include a circuit unit (e.g., a circuit) for controlling the operation of the sensor and the device. In one example, the circuit unit of the temperature control unit 160 may be provided outside the first chamber 110.

Because the temperature control unit 160 is provided, the temperature of the inside 115 of the first chamber 110 may be maintained at a set temperature while metrology and inspection of the material layer 150 is performed. For example, the temperature may be maintained at 400 °C or less, but is not limited thereto.

The operation of the temperature control unit 160 may be controlled based on the pressure of the inside 115 of the first chamber 110. In one example, the temperature control unit 160 may be operated in conjunction with the pressure change of the inside 115 of the first chamber 110.

In one example, a pressure sensor 163 for sensing pressure variation of the inside 115 of the first chamber 110 may be provided inside the first chamber 110.

A window 195 for loading the substrate 140 may be provided on the side wall 110A of the first chamber 110. The window 195 may be closed while metrology and inspection for the material layer 150 is performed.

An ultrasonic transducer 170, a gas inlet 180, and a gas outlet 190 may be provided at (e.g., in or on) the upper plate 110B of the first chamber 110, and, in addition to these elements, other elements may further be provided at (e.g., in or on) the upper plate 110B.

The ultrasonic transducer 170 may be configured to emit ultrasonic waves SW1 for metrology and inspection of the material layer 150 and receive ultrasonic waves SW2 reflected from the material layer 150. The frequency of the emitted ultrasonic wave SW1 may be in a range from about 10 MHz to about 5 GHz, but may not be limited to this range. The reflected ultrasonic wave SW2 may include a component reflected from an upper surface of the material layer 150 and a component reflected inside of the material layer 150. The component reflected inside the material layer 150 may include ultrasonic waves reflected from various patterns formed on the material layer 150. The various patterns may include, but are not limited to, semiconductor elements, optical elements, memory elements, wiring, holes, trenches, slits, etc. The various patterns may include patterns having sizes in which length, height, width, etc., are expressed in nanometers (nm), that is, patterns having nano-size or nanostructures. In one example, the various patterns may include a pattern having a 3D nanostructure. In one example, at least one from among the semiconductor elements, optical elements, memory elements, wiring, holes, trenches, slits, etc., may have a 3D nanostructure. In one example, the material layer 150 may include a plurality of the holes, trenches, or slits, and the plurality of holes, trenches, or slits may be formed at a given pitch. In one example, the plurality of holes may form a hole array, and a planar shape of the hole array may be a hexagonal or square grid shape. The cross section of each hole may be circular or elliptical. A diameter of each hole in the plurality of holes may be the same, or may be different depending on the position of each hole. In addition, the diameter of each hole may be different depending on the depth of the hole. In addition, the depth of the hole may be different depending on the position of each hole.

In one example, the elements may be provided between the holes and between the trenches or between the slits. The hole, trench, or slit may be a region where vertical or horizontal wiring for connecting the elements is formed.

The ultrasonic transducer 170 may be provided in a form in which at least a part of it is embedded in the upper plate 110B. A height of a surface from which the ultrasonic waves SW1 of the ultrasonic transducer 170 are emitted, that is, a surface of the ultrasonic transducer 170 directly facing the material layer 150, may be lower than an upper surface of the upper plate 110B. The ultrasonic transducer 170 may be provided above the material layer 150. A distance D1 between the ultrasonic transducer 170 and the material layer 150 may be greater than the thickness L1 of the material layer 150. For example, the distance D1 may be a distance at which crosstalk between ultrasonic waves SW1 radiated onto the material layer 150 and ultrasonic waves SW2 reflected from inside the material layer 150 is minimized or prevented. For example, the distance D1 may be a distance at which the offset of the ultrasonic waves SW1 and the ultrasonic waves SW2 may be minimized or prevented. In one example, the distance D1 may be about 10 times the thickness L1 of the material layer 150, but is not limited thereto. The distance D1 may be adjusted to increase the resolution and/or accuracy of the ultrasonic metrology and inspection. In one example, the ultrasonic transducer 170 may include a receiving unit (e.g., a receiver) for receiving the ultrasonic waves SW2 reflected from the material layer 150.

In one example, the ultrasonic transducer 170 may be provided to be moved in a first direction and a second direction perpendicular to the first direction for the metrology and inspection of the material layer 150. A driving device (e.g., motor, etc.) for such movement of the ultrasonic transducer 170 may be provided on the upper plate 110B or another part of the first chamber 110. Therefore, the metrology and inspection for the material layer 150 may be performed while moving the substrate 140 or moving the ultrasonic transducer 170.

The gas inlet 180 may be an inlet passage that enables gas to be supplied to the inside 115 of the first chamber 110 for metrology and inspection for the material layer 150. The gas inlet 180 may be connected to a high-pressure gas supply source 198 provided outside the first chamber 110. While metrology and inspection for the material layer 150 is performed, high-pressure gas supplied from the high-pressure gas supply source 198 may be supplied to the inside 115 of the first chamber 110 through the gas inlet 180. Therefore, the pressure of the inside 115 of the first chamber 110 may be controlled by controlling the amount of gas supplied to the first chamber 110 from the high-pressure gas supply source 198. A pressure control valve 185 for controlling the pressure of the gas supplied to the first chamber 110 may be separately provided on the gas supply path between the high-pressure gas supply source 198 and the gas inlet 180. The pressure control valve 185 may not be provided separately from the high-pressure gas supply source 198. For example, the pressure control valve 185 may be provided inside the high-pressure gas supply source 198. The pressure of the inside 115 of the first chamber 110 may be increased to several tens of atmospheres (atm) by using the gas supplied from the high-pressure gas supply source 198. In one example, the pressure increase may be performed adiabatically.

The gas supplied through the gas inlet 180 may include nitrogen (N₂), oxygen (O₂), hydrogen (H₂), or a mixture gas thereof. The gas inlet 180 may be provided between the ultrasonic transducer 170 and the side wall 110A, but is not limited to this location. For example, the gas inlet 180 may be located between the substrate holder 130 and the side wall 110A.

The gas outlet 190 may be a passage through which gas introduced through the gas inlet 180 is discharged. That is, after the metrology and inspection for the material layer 150 is completed, the gas introduced into the first chamber 110 may be discharged outside the first chamber 110 through the gas outlet 190. At this time, the operation of the high-pressure gas supply source 198 may be stopped or the pressure control valve 185 may be closed.

The gas outlet 190 may be connected to a gas processing device 205 provided outside the first chamber 110. The gas within the inside 115 of the first chamber 110 may be discharged to the outside of the first chamber 110 through the gas outlet 190 and the gas processing device 205. A discharging pump 207 may be provided between the gas outlet 190 and the gas processing device 205. The gas processing device 205 may be expressed as a discharging device or an outgassing device.

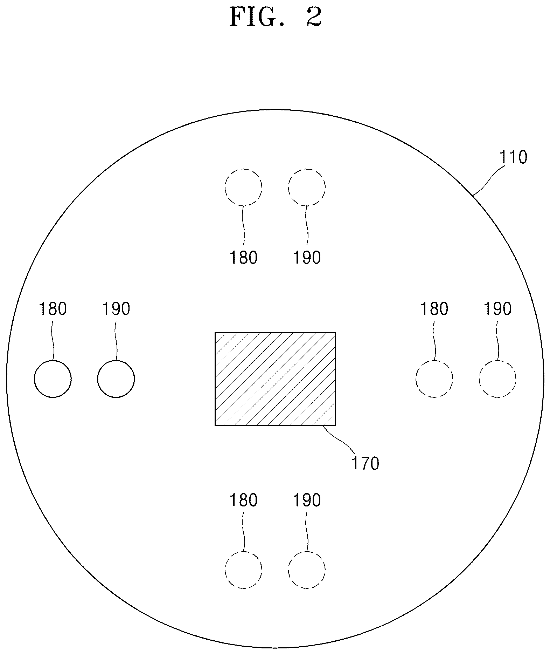

In one example, the gas outlet 190 may be connected to a gas processing device provided at (e.g., in or on) an outer wall of the first chamber 110 or at a location separated from the first chamber 110, and may be controlled while being in a connected state. The gas outlet 190 may be provided between the gas inlet 180 and the ultrasonic transducer 170, but may also be provided at other locations. For example, as indicated by a dashed line, the gas outlet 190 may be provided on the right side of the ultrasonic transducer 170. The positions or arrangements of the gas inlet 180, the gas outlet 190, and the ultrasonic transducer 170 may vary. FIGS. 2 to 6 show examples of the positions or arrangements of the gas inlet 180, the gas outlet 190, and the ultrasonic transducer 170.

FIG. 2 is a plan view of FIG. 1. For convenience of illustration, the high-pressure gas supply source 198, the pressure control valve 185, and the gas processing device 205 are not illustrated.

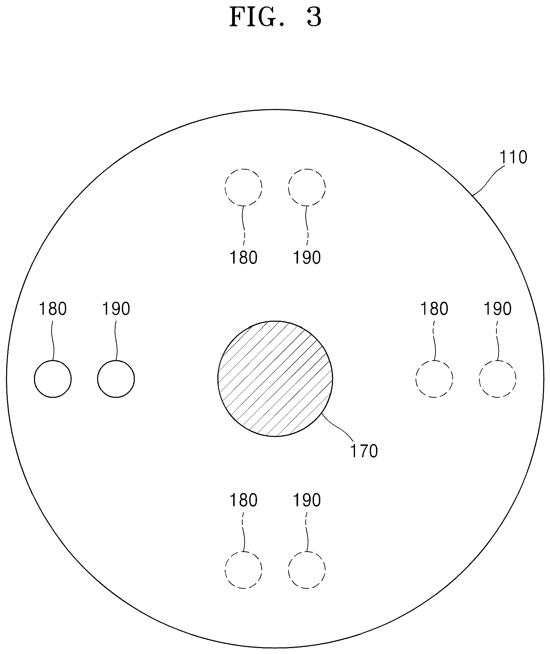

Referring to FIG. 2, the shape of the first chamber 110 in a plan view may be circular or nearly circular, and may also be non-circular (e.g., square). The shape of the ultrasonic transducer 170 in a plan view may be square, but may also be circular as illustrated in FIG. 3. The gas inlet 180 and the gas outlet 190 may both be provided between the side wall 110A (see FIG. 1) of the first chamber 110 and the ultrasonic transducer 170. In one example, the gas inlet 180 and the gas outlet 190 may be provided on the left, right, upper, or lower side of the ultrasonic transducer 170, as illustrated by the dashed lines in FIG. 3.

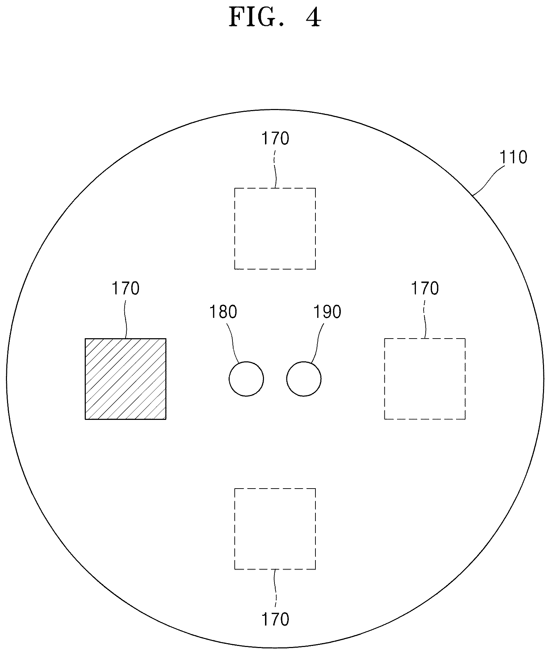

FIG. 4 is an example of the plan view of FIG. 1, and illustrates a case when the arrangement of the ultrasonic transducer 170, the gas inlet 180, and the gas outlet 190 is different from FIGS. 1 to 3.

Referring to FIG. 4, the gas inlet 180 and the gas outlet 190 may be located at the center of the first chamber 110 in the plan view (e.g., at a center in a horizontal direction of the first chamber 110), and the ultrasonic transducer 170 may be arranged between the gas inlet 180 and the side wall 110A (see FIG. 1) of the first chamber 110. In this arrangement structure, the ultrasonic transducer 170 may be provided on the left, right, upper or lower side of the gas inlet 180 and the gas outlet 190, as illustrated by dashed lines in FIG. 4. That is, the ultrasonic transducer 170 may be placed anywhere around the gas inlet 180 and gas outlet 190.

In FIGS. 2 to 4, the gas inlet 180 and the gas outlet 190 are shown as being placed adjacent to each other, but embodiments of the disclosure are not limited thereto. For example, the gas inlet 180 and the gas outlet 190 may be placed at a distance greater than the distance at which they are placed adjacently.

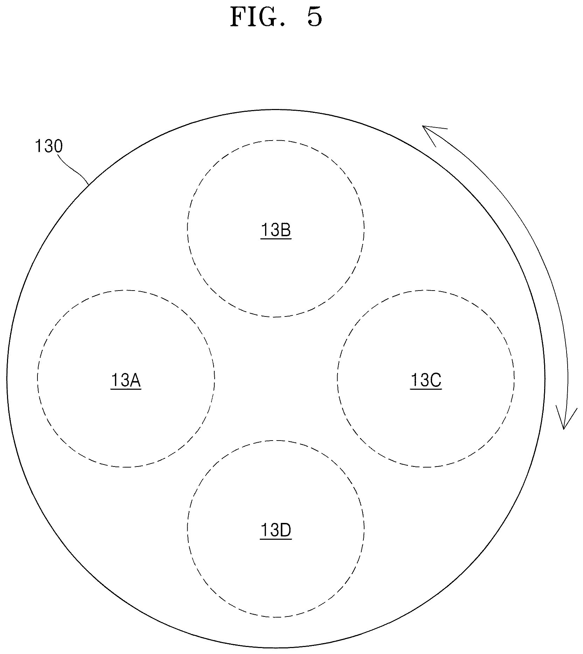

FIG. 5 shows an example of a plan view of the substrate holder 130 of FIG. 1.

Referring to FIG. 5, the shape of the substrate holder 130 in a plan view may be circular or nearly circular, but may also be rectangular. The substrate holder 130 may include a plurality of regions (e.g., a first region13A, a second region 13B, a third region 13C, and a fourth region 13D) into which substrates may be loaded. The shape of each of the regions (e.g., the first to fourth regions 13A to 13D) in a plan view may be circular. Each of the regions (e.g., the first to fourth regions 13A to 13D) may have the same shape in a plan view as a shape of the substrate loaded on each region (e.g., the first to fourth regions 13A to 13D) in the plan view. A diameter of each of the regions (e.g., the first to fourth regions 13A to 13D) may be greater than a diameter of the loaded substrate. The regions (e.g., the first to fourth regions 13A to 13D) may be spaced apart from each other and may be provided to have circular symmetry. The substrate holder 130 may have regions in which multiple substrates may be loaded simultaneously. Although only four regions (e.g., the first to fourth regions 13A to 13D) are illustrated in FIG. 5 for explanation, the substrate holder 130 may include four or fewer regions or four or more regions as regions in which substrates may be loaded simultaneously. In one example, the substrate holder 130 may be rotated. The rotation of the substrate holder 130 may be controlled in conjunction with the operation of the ultrasonic transducer 170.

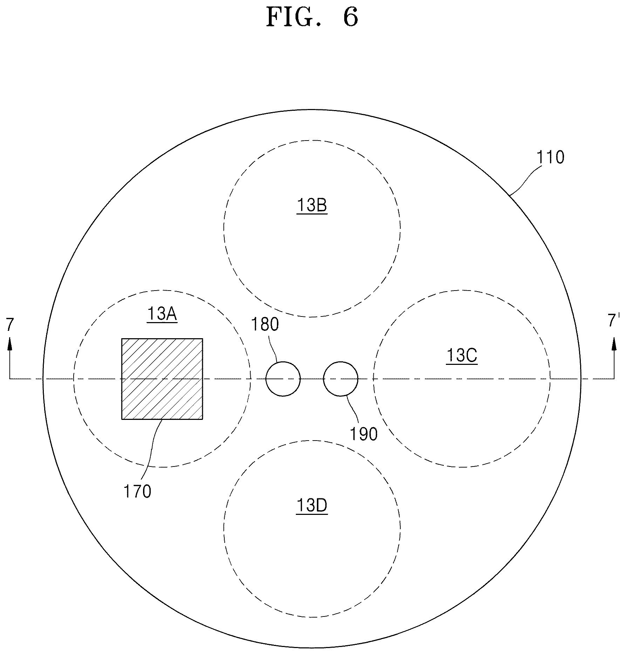

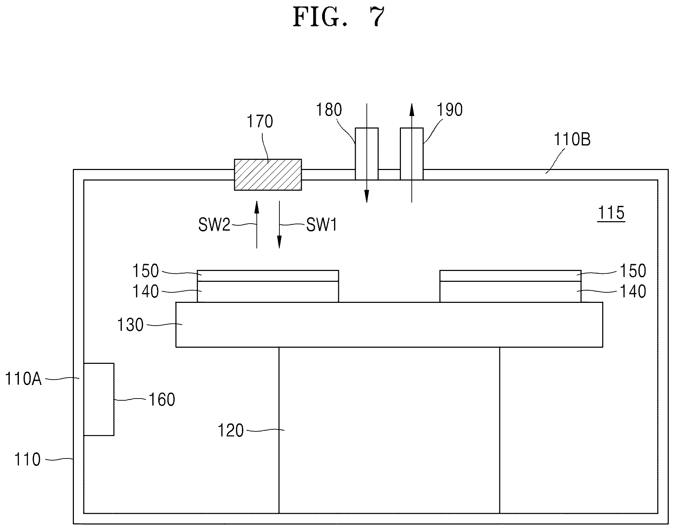

FIG. 6 is a plan view showing the arrangement relationship of the ultrasonic transducer 170, the gas inlet 180, and the gas outlet 190 when the substrate holder 130 of FIG. 1 includes the configuration illustrated in FIG. 5. FIG. 7 shows a cross-section taken along a line 7-7' of FIG. 6.

Referring to FIG. 6 and FIG. 7 together, the ultrasonic transducer 170 may be provided to be positioned to overlap with the first region 13A of the substrate holder 130, and the gas inlet 180 and the gas outlet 190 may be provided to be positioned between the first region 13A and the third region 13C and between the second region 13B and the fourth region 13D. The gas inlet 180 and the gas outlet 190 may be provided at different locations. The ultrasonic transducer 170 may be positioned to overlap with any one from among the second region 13B, the third region 13C, and the fourth region 13D.

In the arrangement structure of FIG. 6, the substrate holder 130 may be rotated or the ultrasonic transducer 170 may be rotated. When the substrate holder 130 is rotated, the ultrasonic transducer 170 may be fixed, and while the substrate holder 130 is rotated clockwise or counterclockwise, metrology and inspection may be performed on the material layer 150 provided on the substrate 140 loaded in the first to fourth regions 13A to 13D.

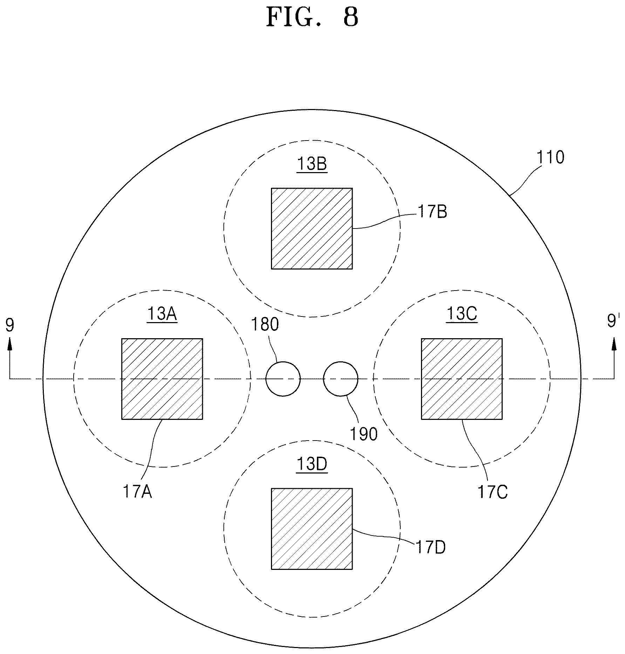

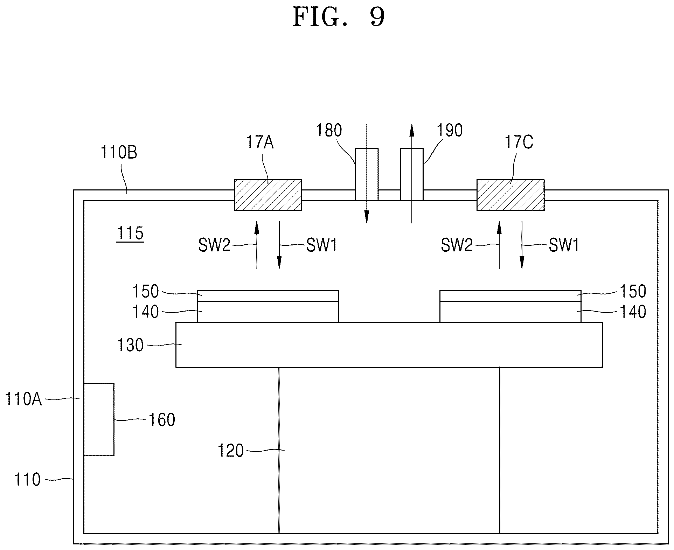

FIG. 8 shows a case when the first to fourth transducers 17A to 17D are provided to correspond to each region 13A to 13D in a case where the substrate holder 130 of FIG. 1 includes the first to fourth regions 13A to 13D as shown in FIG. 5. FIG. 9 shows a cross-section taken along a line 9-9' of FIG. 8.

Referring to FIGS. 8 and 9 together, the first to fourth transducers 17A to 17D may be provided in a one-to-one correspondence with the first to fourth regions 13A to 13D. Each of the first to fourth transducers 17A to 17D may be identical to the ultrasonic transducer 170 described with reference to FIG. 1 in terms of configuration, structure, and function, but may also be different. The gas inlet 180 and the gas outlet 190 may be provided between the first transducer 17A and the third transducer 17C and between the second transducer 17B and the fourth transducer 17D. The gas inlet 180 and the gas outlet 190 may be provided at different locations at (e.g., in or on) the upper plate 110B.

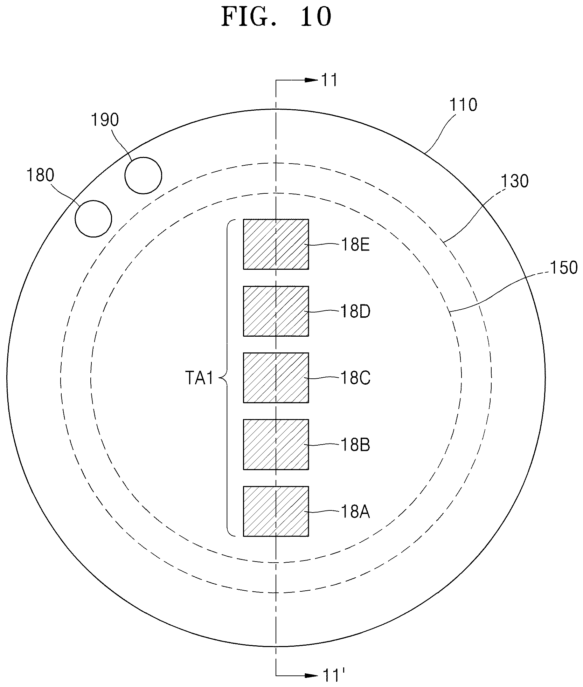

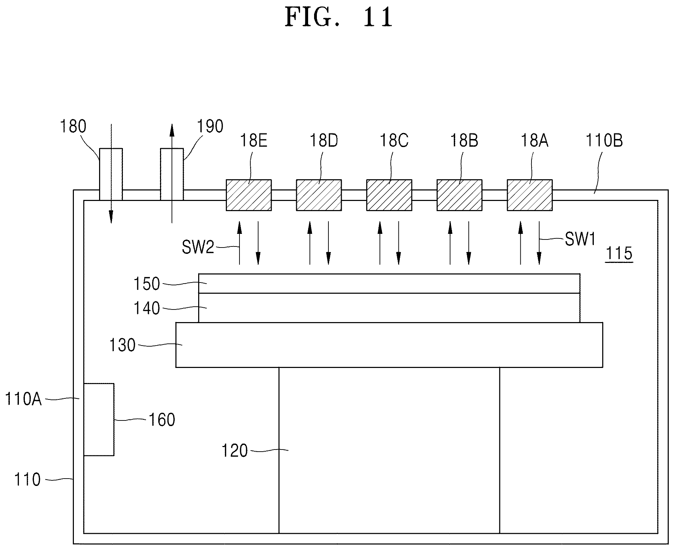

FIG. 10 is a plan view showing a case when a transducer array is provided instead of one ultrasonic transducer 170 in FIG. 1. FIG. 11 shows a cross-section taken along a line 11-11' of FIG. 10.

Referring to FIGS. 10 and 11 together, a one-dimensional (1D) transducer array TA1 may be provided and may include a plurality of transducers 18A to 18E arranged in a row above the material layer 150. For convenience of illustration, the transducer array TA1 is illustrated as including five transducers 18A to 18E, but may include less than or more than five transducers. In the case illustrated in FIG. 10, the transducer array TA1 may scan the material layer 150 while moving in a given direction for metrology and inspection. In one example, the material layer 150 may be moved instead of moving the transducer array TA1. Each of the transducers 18A to 18E of the transducer array TA1 may be used as a pixel. Therefore, by scanning the material layer 150 in a given direction using the transducer array TA1, an image of an internal structure and defects of the material layer 150 may be obtained. The resolution of an image obtained at this time may be adjusted by adjusting the distance between the transducer array TA1 and the material layer 150, and a carrier frequency used as ultrasound.

In one example, the size of each of the transducers 18A to 18E may be on the order of several micrometers to several millimeters.

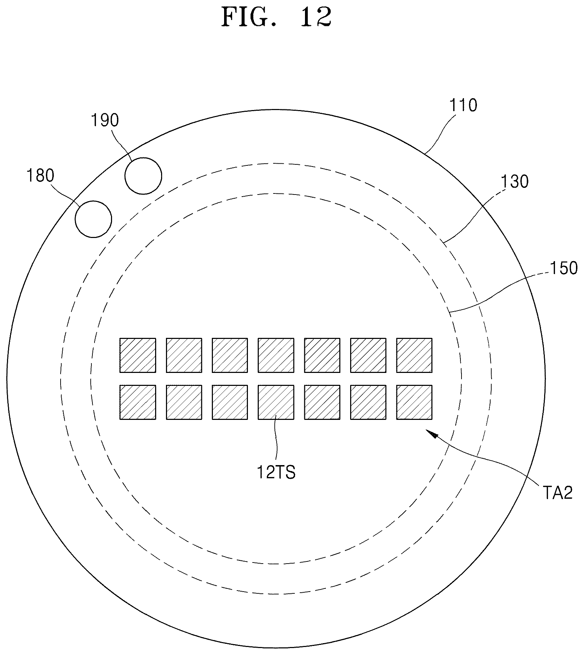

FIG. 12 is a plan view showing a case when a two-dimensional (2D) transducer array TA2 is provided instead of the 1D transducer array TA1 of FIG. 10.

Referring to FIG. 12, the 2D transducer array TA2 may include a plurality of transducers 12TS that are aligned two-dimensionally above the material layer 150. Each transducer 12TS of the 2D transducer array TA2 may be the same as the ultrasonic transducer 170 of FIG. 1 in terms of configuration, structure, and function, but may also be different. The transducer array TA2 may include more or fewer transducers than the number of transducers 12TS illustrated in FIG. 12. For example, as shown in FIG. 12, the transducer array TA2 may be configured with 2 rows and 7 columns, but may include more than 2 rows and more than 7 columns or less than 7 columns. The size of each transducer 12TS in the transducer array TA2 may be several micrometers to several millimeters.

In FIG. 12, the transducer array TA2 may be moved in a given direction for scanning the material layer 150. Conversely, the material layer 150 may be moved instead of the transducer array TA2.

In the transducer array TA2, each transducer 12TS may be one pixel. Therefore, by scanning the material layer 150 using the transducer array TA2, an image of the internal structure or defect of the material layer 150 may be obtained. The resolution of the image obtained at this time may be adjusted by adjusting the distance between the transducer array TA2 and the material layer 150, and the carrier frequency used as ultrasound. In addition, by increasing the transducer density of the transducer array TA2, that is, by reducing a pitch between the transducers 12TS in the transducer array TA2, the resolution of the image may be increased.

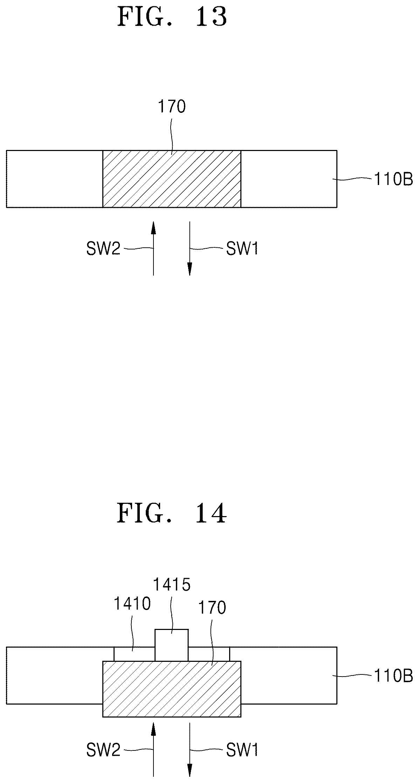

FIGS. 13 to 16 show various embodiments of the first region A1 of FIG. 1, that is, various examples of the arrangement (e.g., provided form) of the ultrasonic transducer 170.

As illustrated in FIG. 13, the ultrasonic transducer 170 may be provided with the same thickness as the thickness of the upper plate 110B, and thus, the ultrasonic transducer 170 may be provided in a form in which the entire thickness of the ultrasonic transducer is completely buried in the upper plate 110B. Accordingly, an upper surface of the ultrasonic transducer 170 may be at the same height as an upper surface of the upper plate 110B, and thus, the upper surface of the ultrasonic transducer 170 and the upper surface of the upper plate 110B may be coplanar. In addition, a lower surface (bottom surface) of the ultrasonic transducer 170 may be at the same height as a lower surface (bottom surface) of the upper plate 110B, and thus, the lower surface of the ultrasonic transducer 170 may be coplanar with the lower surface of the upper plate 110B.

In an embodiment, the ultrasonic transducer 170 may be provided so that the bottom thereof protrudes below the upper plate 110B, as illustrated in FIG. 14. That is, the bottom surface of the ultrasonic transducer 170 protrudes into the inside 115 of the first chamber 110, so that the height of the bottom surface of the ultrasonic transducer 170 may be lower than the bottom surface of the upper plate 110B. The upper surface of the ultrasonic transducer 170 may be lower than the upper surface of the upper plate 110B.

As a result, the arrangement of the ultrasonic transducer 170 illustrated in FIG. 14 is such that a remaining portion of the ultrasonic transducer 170, other than a bottom portion of the ultrasonic transducer 170, is embedded in the upper plate 110B. As shown in FIG. 14, a body 1410 may be provided and may be a cover or cap covering the upper surface of the ultrasonic transducer 170. When the body 1410 (e.g., the cover or cap) is removed, the upper surface of the ultrasonic transducer 170 may be exposed, and replacement or repair of components of the ultrasonic transducer 170 may be performed through the exposed upper surface.

As shown in FIG. 14, an element 1415 may be provided and may be a wiring or a pipe, including such a wiring, for supplying an electric signal for ultrasonic irradiation to the ultrasonic transducer 170 or transmitting an electric signal output from the ultrasonic transducer 170 to the outside of the first chamber 110.

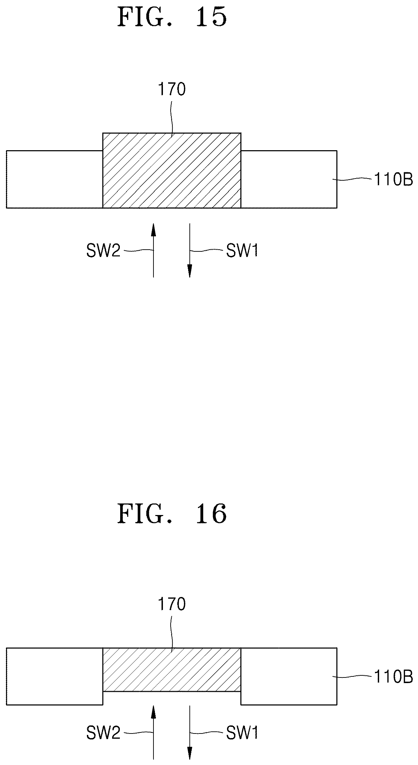

In an embodiment, as shown in FIG. 15, the bottom of the ultrasonic transducer 170 may be the same height as the bottom of the upper plate 110B, and the height of the upper surface of the ultrasonic transducer 170 may be higher than the height of the upper surface of the upper plate 110B. That is, the ultrasonic transducer 170 may be provided in a form in which the upper end of the ultrasonic transducer 170 protrudes outside the upper plate 110B and the remaining portion of the ultrasonic transducer 170 is embedded in the upper plate 110B.

In an embodiment, as illustrated in FIG. 16, the ultrasonic transducer 170 may be provided in a form in which the height of the upper surface is the same as the height of the upper plate 110B and the height of the bottom surface is higher than a height of the bottom surface of the upper plate 110B. That is, a thickness of the ultrasonic transducer 170 may be less than the thickness of the upper plate 110B. Accordingly, a recess may be provided in a region where the ultrasonic transducer 170 is provided inside the upper plate 110B. For example, as illustrated in FIG. 16, a lower surface of the ultrasonic transducer 170 and inner side surfaces of the upper plate 110B may define the recess.

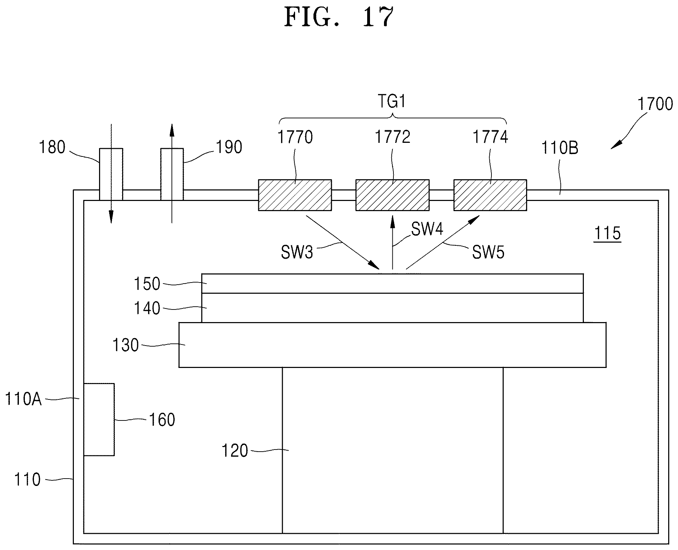

FIG. 17 is a cross-sectional view showing an ultrasonic measurement system (hereinafter, a second measurement system 1700) for 3D nanostructure metrology and inspection including a pattern with a high aspect ratio according to an example embodiment. The following description may focus on aspects different from aspects described with reference to FIG. 1, the same reference numerals represent the same members, and repeated descriptions thereof may be omitted.

Referring to FIG. 17, the second measurement system 1700 may include a transducer group TG1 for 3D nanostructure metrology and inspection for one material layer 150. The transducer group TG1 may be provided at a location of the ultrasonic transducer 170 of the first measurement system 100 of Fig. 1 or may be provided at another location. The transducer group TG1 may include an ultrasonic emitting transducer 1770 that radiates ultrasonic waves SW3 to the material layer 150, a first receiving transducer 1772 and a second receiving transducer 1774 for receiving ultrasonic waves SW5 reflected from the material layer 150. The ultrasonic waves SW3 emitted from the ultrasonic emitting transducer 1770 may be incident obliquely on a detection region (target region) of the material layer 150.

Ultrasonic signals reflected through the nanostructure or the 3D nanostructure inside the material layer 150 may be detected by the first receiving transducer 1772 and the second receiving transducer 1774. Most 3D nanopatterns (e.g., holes, slits, etc.) with high aspect ratios may act as ultrasonic metamaterials with very strong anisotropy. When there are no defects in the 3D nanopatterns, ultrasonic waves are completely transmitted in the vertical direction of each 3D nanopattern, and thus, the first receiving transducer 1772 and the second receiving transducer 1774 may receive ultrasonic waves by utilizing this characteristic. A hole or slit, which is an example of nanopattern having a high aspect ratio, may be expressed as an air channel or a gas channel because it is filled with air or gas in a metrology and inspection.

The second receiving transducer 1774 may be used to measure an average value of an interface shape of the defect-free structures of the 3D nanostructure array (e.g., the air channel array) included in the material layer 150. The second receiving transducer 1774 may be equipped to receive the ultrasonic wave SW5 emitted obliquely from the detection region of the material layer 150.

The first receiving transducer 1772 may measure an ultrasonic wave signal scattered at a wide azimuth angle from a defect that occurred in the 3D nanostructure array with a high signal-to-noise ratio SNR similar to a dark field imaging system of an optical inspection facility. The first receiving transducer 1772 may be provided between the ultrasonic emitting transducer 1770 and the second receiving transducer 1774, and may be provided to receive ultrasonic waves SW4 scattered by a defect. For example, the first receiving transducer 1772 may be provided to receive ultrasonic waves SW4 vertically emitted from a detection region of the material layer 150. The ultrasonic waves SW4 may include ultrasonic waves scattered by a defect in the detection region of the material.

The remaining configuration of the second measurement system 1700 may be the same or substantially the same as the first measurement system 100.

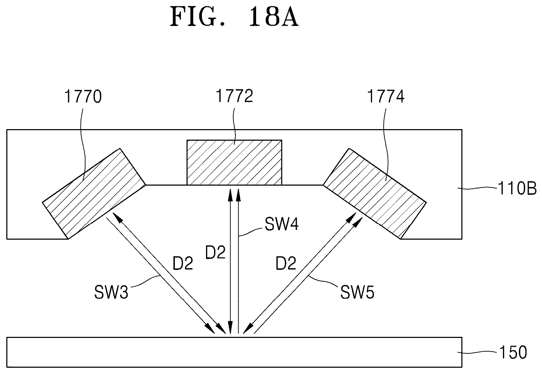

FIG. 18A is a diagram showing an example of the configuration of the transducer group TG1 of FIG. 17.

Referring to FIG. 18A, the ultrasonic emitting transducer 1770 and the first receiving transducer 1772 and the second receiving transducer 1774 of the transducer group TG1 may be positioned within the upper plate 110B at the same distance D2 from the detection region of the material layer 150. The distance D2 may be 10 times or more the thickness L1 of the material layer 150 but is not limited thereto. The ultrasonic emitting transducer 1770 may be arranged to be inclined with respect to the material layer 150, and accordingly, the ultrasonic wave SW3 emitted from the ultrasonic emitting transducer 1770 may be incident obliquely on the detection region of the material layer 150. The incident angle of the ultrasonic wave SW3 with respect to the upper surface of the material layer 150 may be an acute angle.

The second receiving transducer 1774 may be arranged to be inclined with respect to the material layer 150. For example, the second receiving transducer 1774 may be arranged to be inclined within the upper plate 110B so as to receive the ultrasonic wave SW5 emitted obliquely from the detection region of the material layer 150. Like the ultrasonic emitting transducer 1770, the second receiving transducer 1774 may be angled at an acute angle with respect to the bottom surface of the upper plate 110B.

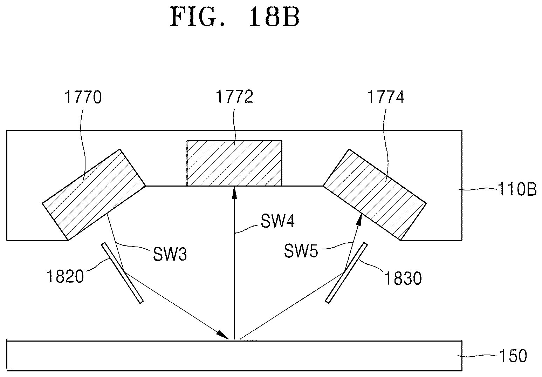

In one example, as shown in FIG. 18B, a first path changing member 1820 may be provided between the ultrasonic emitting transducer 1770 and the material layer 150.

In addition, a second path changing member 1830 configured to change an ultrasonic path may be provided between the second receiving transducer 1774 and the material layer 150.

An ultrasonic emitted from the ultrasonic emitting transducer 1770 may be reflected by the first path changing member 1820 and then incident to a detection region of the material layer 150.

An ultrasonic that is incident to the second path changing member 1830 from the detection region of the material layer 150 may be reflected by the second path changing member 1830 and then incident to the second receiving transducer 1774.

In one example, the first path changing member 1820 may be comprise a first ultrasonic reflector but not limited to thereto. The second path changing member 1830 may be a second ultrasonic reflector but limited to thereto.

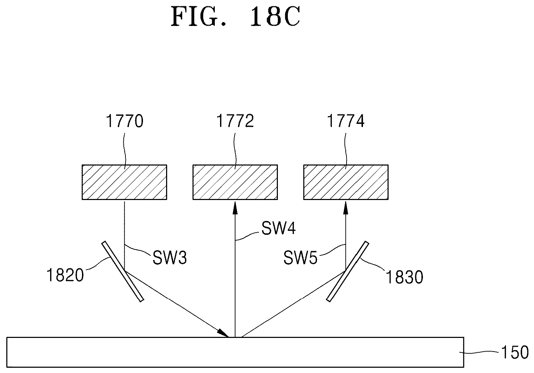

In one example, the ultrasonic emitting transducer 1770 and the second receiving transducer 1774 may not be arranged obliquely as described above, but may be provided flat at (e.g., in or on) the bottom surface of the upper plate 110B like the first receiving transducer 1772. In this case, as shown in FIG. 18C, the first path changing member 1820 that may change the travelling path of the ultrasonic waves emitted from the ultrasonic emitting transducer 1770 may be provided between the ultrasonic emitting transducer 1770 and the material layer 150 so that the ultrasonic waves SW3 emitted from the ultrasonic emitting transducer 1770 are obliquely incident on the detection region of the material layer 150. With respect to the second receiving transducer 1774, the second path changing member 1830 that may change the travelling path of the ultrasonic waves SW5 may be provided between the second receiving transducer 1774 and the material layer 150 so that the ultrasonic waves SW5 obliquely incident from the detection region of the material layer 150 are vertically incident on the second receiving transducer 1774. In one example, the first path changing member 1820 and the second path changing member 1830 may be provided in the ultrasonic emitting transducer 1770 and the second receiving transducer 1774, respectively. In one example, the first and second ultrasonic path changing members may be provided separately and independently.

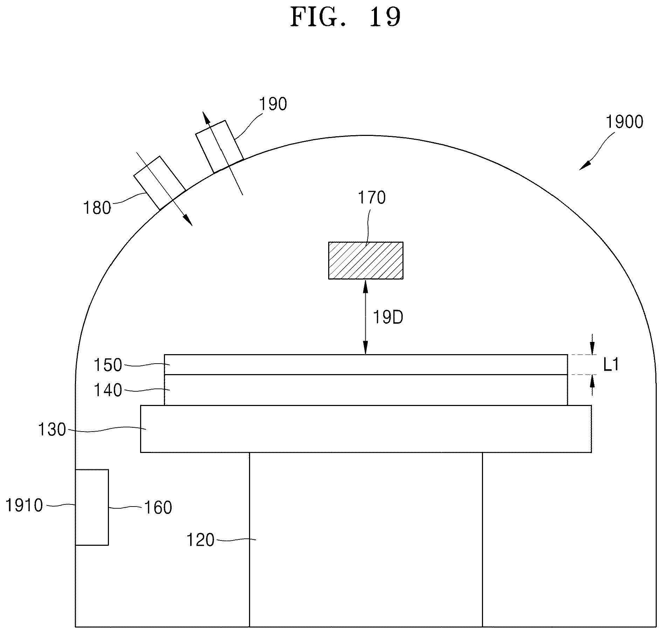

FIG. 19 is a cross-sectional view showing an ultrasonic measurement system (hereinafter, a third measurement system 1900) for metrology and inspection of a 3D nanostructure including a high aspect ratio pattern according to an example embodiment. The following description may focus on aspects different from aspects described with reference to FIG. 1, the same reference numerals represent the same members, and the repeated description thereof may be omitted.

Referring to FIG. 19, the third measurement system 1900 may be the same as the first chamber 110 of the first measurement system 100 of FIG. 1, except that an upper structure of a second chamber 1910 may have a hemispheric type, but embodiments are not limited thereto.

An ultrasonic transducer 170 may be provided inside the second chamber 1910 and may be spaced apart from the hemispherical ceiling of the second chamber 1910. A gap 19D between the ultrasonic transducer 170 and the material layer 150 may be the same as the distance D1 between the ultrasonic transducer 170 and the material layer 150 of FIG. 1. In addition, the relationship between the gap 19D and a thickness L1 of the material layer 150 may be the same as the relationship between the distance D1 and the thickness L1 of the material layer 150 of FIG. 1.

A gas inlet 180 and a gas outlet 190 may be provided in the hemispherical upper structure of the second chamber 1910. The gas inlet 180 and the gas outlet 190 may be provided in various positions as shown in FIGS. 2 to 12.

The embodiments shown in FIGS. 2 to 12 may also be applied to the third measurement system 1900. That is, the substrate holder 130 of the third measurement system 1900 may also include multiple regions into which substrates may be loaded, and one ultrasonic transducer may be provided corresponding to the multiple regions, or multiple ultrasonic transducers may be provided in one-to-one correspondence with the multiple regions.

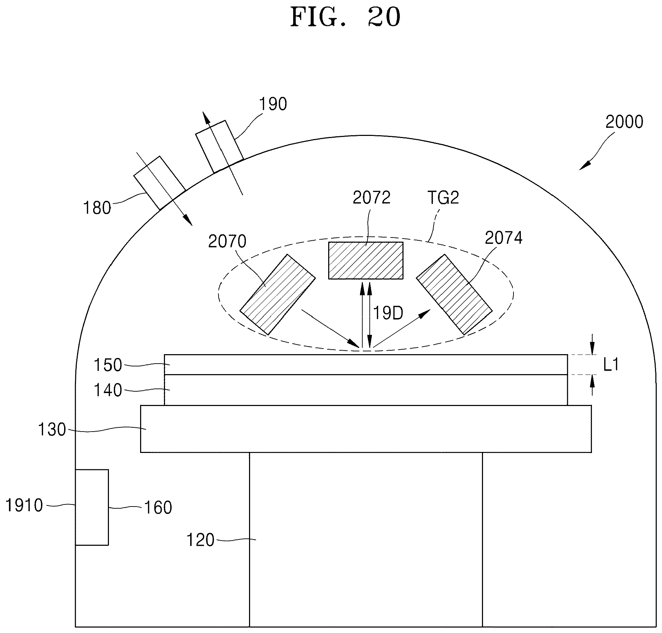

FIG. 20 is a cross-sectional view showing an ultrasonic measurement system (hereinafter, a fourth measurement system 2000) for metrology and inspection of a 3D nanostructure including a high aspect ratio pattern according to an example embodiment. The following description may focus on aspects different from aspects of the third measurement system 1900 described with reference to FIG. 19, the same reference numerals represent the same members, and the repeated description thereof may be omitted.

Referring to FIG. 19 and FIG. 20 together, the fourth measurement system 2000 may include a second transducer group TG2 instead of the ultrasonic transducer 170 of the third measurement system 1900. The second transducer group TG2 may include an ultrasonic emitting transducer 2070, a first receiving transducer 2072, and a second receiving transducer 2074. The transducer configuration of the second transducer group TG2 may be the same as the configuration of the first transducer group TG1 illustrated in FIG. 18, or may be different. The configuration and function of each of the ultrasonic emitting transducer 2070, the first receiving transducer 2072, and the second receiving transducer 2074 of the second transducer group TG2 may be identical to the configuration and function of the ultrasonic emitting transducer 1770, the first receiving transducer 1772, and the second receiving transducer 1774 of the first transducer group TG1 illustrated in FIG. 18. The remaining configuration of the fourth measurement system 2000 may be the same as the third measurement system 1900.

For convenience, FIGS. 19 and 20 do not show the high-pressure gas supply source 198, the pressure control valve 185 connected to the gas inlet 180, and the exhaust device 205 connected to the gas outlet 190. However, the third measurement system 1900 and the fourth measurement system 2000 may include the high-pressure gas supply source 198, the pressure control valve 185 connected to the gas inlet 180, and the exhaust device 205 connected to the gas outlet 190, as described with reference to other embodiments of the disclosure.

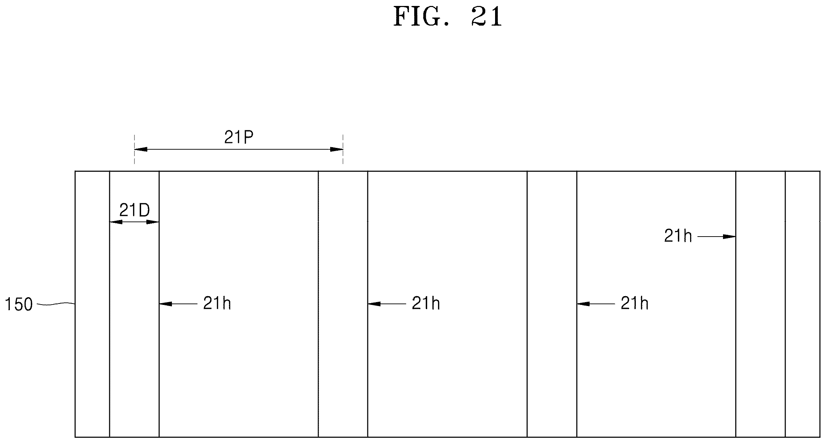

FIG. 21 shows an example of a pattern having a 3D nanostructure among the patterns having a high aspect ratio formed in the material layer 150, and shows a plurality of holes 21h, that is, a plurality of air channels, formed in the material layer 150.

Referring to FIG. 21, the plurality of holes 21h in the material layer 150 may be spaced apart from each other and aligned at a first pitch 21P. The first pitch 21P may be greater than an opening diameter 21D of the holes 21h. In one example, the first pitch 21P may be several hundred nm to several tens of µm, but is not limited thereto. For example, the first pitch 21P may be in a range from about 100 nm to about 90 µm, about 300 nm to about 70 µm, or about 500 nm to about 50 µm, but is not limited thereto. In one example, the opening diameter 21D of the hole 21h may be in a range from about 100 nm to about several µm, but is not limited thereto. The opening diameter of the hole 21h may be constant from the top (opening) to the bottom, but may vary depending on the depth. In addition, the opening diameter 21D of each hole 21h may vary depending on the position of each hole 21h. In addition, the depth of each hole 21h may vary depending on the position of each hole 21h.

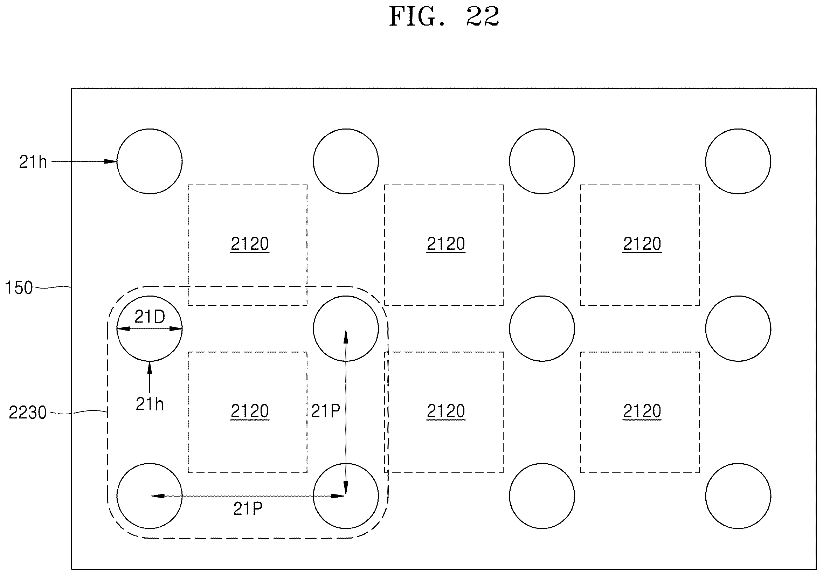

A region between the holes 21h in the material layer 150 may be an element region 2120 (see FIG. 22). The element region 2120 may include, but is not limited to, semiconductor elements, optical elements, memory elements, switching elements, and wiring. In one example, the element region 2120 may include a vertically stacked multilayer structure, and the elements and wiring may be formed in each layer of the multilayer structure. In one example, the element region 2120 may include a high bandwidth memory (HBM). In this case, each hole 21h may be a vertical through hole.

FIG. 22 is a plan view of FIG. 21.

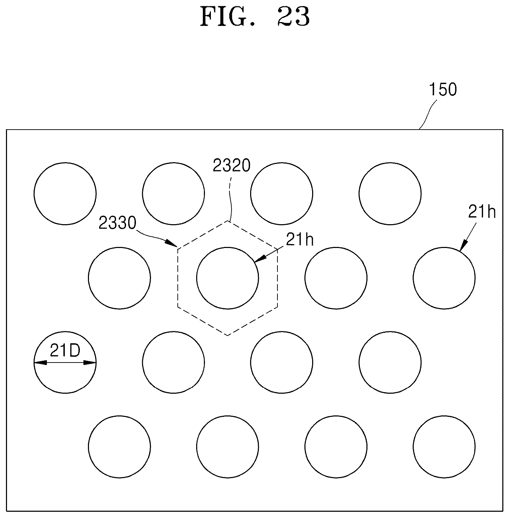

Referring to FIG. 22, the plurality of holes 21h may be aligned at the first pitch 21P in horizontal and vertical directions on a plane (e.g., in a plan view). The first pitches 21P in the horizontal and vertical directions may be the same, but may also be different. In the case of the plurality of holes 21h being aligned in a grid shape as described above, the plurality of holes 21h may form a unit alignment arrangement 2230 that has a shape of a square grid. In the unit alignment arrangement 2230, the element region 2120 may be arranged in the center and four holes 21h may be arranged around the element region 2120. The element region 2120 may be a region where elements are formed, and may be expressed as an element formation region or an electronic element region. The shape of the unit alignment arrangement 2230 in a plan view may vary. For example, as illustrated in FIG. 23, a unit alignment arrangement 2330 may be a form in which one through hole 21h is arranged at the center (e.g., overlapping with the center) of the element region 2320 having a hexagonal shape. The material layer 150 may include a plurality of element regions 2120 and a plurality of through holes 21h, and the plurality of element regions 2120 and the multiple through holes 21h may correspond to the results of the unit alignment arrangement 2330 being repeated up, down, left, and right in the plan view.

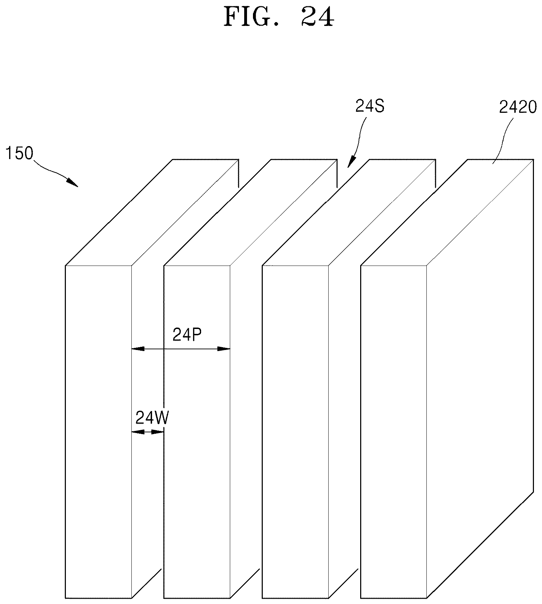

FIG. 24 shows an example of a 3D nanostructure having a high aspect ratio formed in the material layer 150.

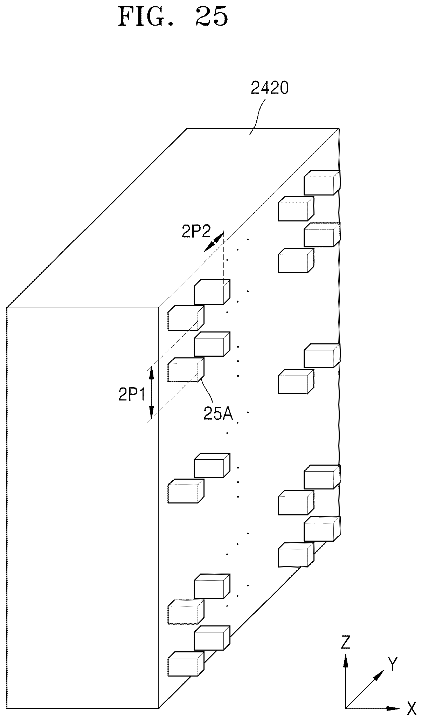

Referring to FIG. 24, the material layer 150 may include a plurality of element regions 2420 and a plurality of slits 24S defined by side surfaces of the element regions 2420. Each slit 24S may be formed between the plurality of element regions 2420. The slits 24S may be aligned in a given direction at a second pitch 24P. A width 24W of the slits 24S in the given direction may be less than the second pitch 24P. The width 24W of the slit 24S in the direction given above may be less than the width (the value obtained by subtracting the width 24W from the second pitch 24P) of the element region 2420. As illustrated in FIG. 25, protrusions 25A may exist on an inner side of the slit 24S, that is, a side surface of the element region 2420. The protrusions 25A may be convex protrusions on the side surface of the element region 2420 that appear during a process of forming the slit 24S.

Therefore, a length of the protrusions 25A may be much less than the width 24W of the slit 24S. The protrusions 25A may be parts of the elements formed in the element region 2420 exposed to the slit 24S. In view of the element region 2420, the protrusions 25A may be aligned in first and second directions that are perpendicular to each other. For example, the protrusions 25A may be aligned with (e.g., have) a third pitch 2P1 in the first direction (e.g., in the Z-axis direction) and may be aligned with (e.g., have) a fourth pitch 2P2 in the second direction (e.g., in the Y-axis direction). In one example, the third pitch 2P1 and the fourth pitch 2P2 may be the same as each other or different from each other. In one example, the third pitch 2P1 may vary in the first direction, and the fourth pitch 2P2 may also vary in the second direction. In one example, the length and shape of the protrusions 25A in FIG. 25 are illustrated as being the same, but may be different or some may be different from each other.

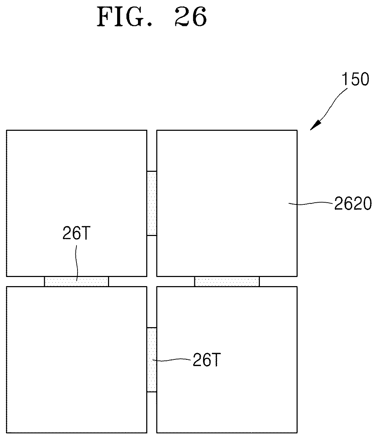

FIG. 26 is a plan view showing an example of a material layer 150.

Referring to FIG. 26, the material layer 150 may include a plurality of chip regions 2620 and a plurality of scribe line regions 26T in which key patterns, etc., are formed. The chip region 2620 may be a region including high aspect 3D nanostructure patterns, and may include various elements (e.g., memory) and 3D nanostructure air channels. The scribe line regions 26T may exist between the plurality of chip regions 2620. A Test Element Group (TEG) pattern that may be used as a reference in alignment or metrology and inspection for the chip region 2620 may be formed in the scribe line region 26T. For example, the scribe line region 26T may include a TEG pattern identical to a certain pattern (e.g., a memory element) formed in the chip region 2620 or a TEG pattern having a spatially modified distribution so as to be comparable to the above-mentioned certain pattern.

In one example, the TEG pattern formed in the scribe line region 26T may have a thin film form without any structure. In addition, the TEG pattern formed in the scribe line region 26T may be a pattern formed together in a process of forming a 3D nanostructure in the chip region 2620 and may be a pattern formed by splitting a length of a specific structure in various ways, such as in an operation of patterning using lithography.

In this way, the scribe line region 26T where the TEG pattern is formed may be arranged adjacent to a 3D nanostructure air channel region to be measured at a specific interval, and the TEG pattern formed in the scribe line region 26T may be utilized for improving measurement precision and calibration. For example, when measuring the 3D nanostructure air channel formation characteristics for each 3D memory semiconductor chip, the scribe line region 26T around the chip may be used as a region for forming the TEG pattern. By identifying or measuring the TEG pattern formed in the scribe line region 26T, the process profile characteristics of the 3D nanostructure air channel may be identified, and a correction value may be provided during actual 3D nanostructure metrology and inspection or a more precise measurement value may be provided based on a machine learning algorithm.

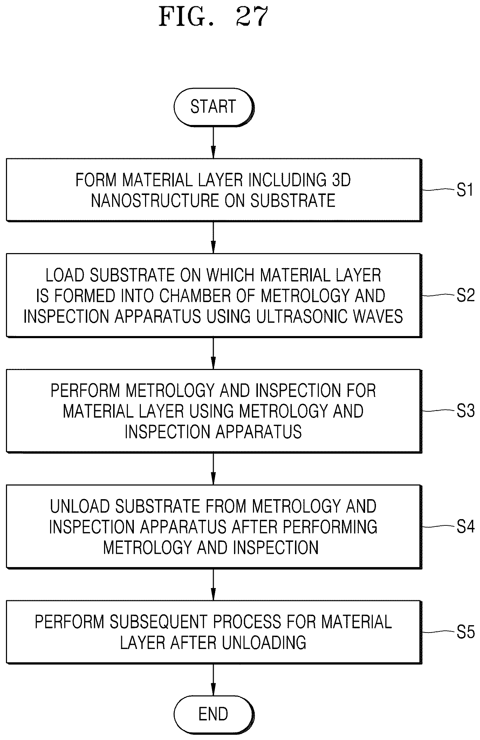

FIG. 27 is a flowchart showing a method of manufacturing a semiconductor device using an ultrasonic metrology and inspection system according to an example embodiment.

Referring to FIG. 27, first, a material layer including a 3D nanostructure may be formed on a substrate (operation S1). The substrate may include a semiconductor substrate or a non-semiconductor substrate. In one example, the operation S1 may include an operation of forming a plurality of patterns on the substrate. The plurality of patterns may include at least one from among a semiconductor element, an optical element, a memory element, a switching element, and a wiring. The plurality of patterns may be formed in multiple layers. The plurality of patterns may be formed by using a photolithography process. The operation S1 may include an operation of forming an interlayer insulating layer covering the plurality of patterns.

The operation S1 may include an operation of forming a high aspect ratio pattern on the material layer on which the plurality of patterns are formed. The high aspect ratio pattern may include, but is not limited to, an air channel (e.g., a hole or a slit) of a 3D nanostructure. The hole or slit having a 3D nanostructure may be for securing a region where vertical wiring is formed to connect the elements or wiring formed in the multilayer. The wiring may be exposed through the hole or slit having a 3D nanostructure. In a subsequent process, the hole or slit may be filled with a conductive wiring material.

Next, the substrate on which the material layer is formed may be loaded into a chamber of a metrology and inspection apparatus using ultrasonic waves (operation S2). In one example, the metrology and inspection apparatus may be one of the measuring systems described with reference to FIGS. 1 to 20.

Next, a metrology and inspection may be performed on the material layer using the metrology and inspection apparatus (operation S3).

In the operation of performing the metrology and inspection (operation S3), the metrology and inspection may be performed in a high-pressure chamber using ultrasonic waves. In the metrology and inspection, because a high-pressure gas is supplied to the air channel of the 3D nanostructure formed in the material layer, the thermal viscosity resistance between the fine nanostructure on a side of the air channel and ultrasonic waves may be reduced. Accordingly, the energy attenuation of ultrasonic wave traveling through the air channel may be reduced, and thus, a precise measurement may be made with a higher signal size at the same frequency.

An ultrasonic pulse output from an ultrasonic transducer (e.g., the ultrasonic transducer 170 in FIG. 1) in the chamber passes through the air layer and penetrates into the 3D nanostructured air channel array. During the process in which the ultrasonic pulse penetrates the 3D nanostructured air channel array, some reflected waves may be generated, and the ultrasonic pulse may be reflected after traveling to a lower end of the air channel. In addition, during the process in which the ultrasonic pulse travels along the air channel included in the air channel array, an echo signal may be generated by a defect (e.g., etching residue, unetched portion, etc.) in the middle portion of the air channel. The ultrasonic transducer 170 may measure the waveform of the ultrasonic signal reflected and returned in this way, and then may compare the measured result with a simulation or a prepared lookup table, or by inference using a machine learning algorithm, thereby detecting the interface shape of the 3D nanostructure within the material layer and the location and characteristics of the defect.

In the above metrology and inspection, the three-dimensional nanostructure or the fine nanostructure of the air channel included in the material layer may not be adjusted in shape or size. Therefore, in order to increase the measurement signal or the resolution of a measurement image in the metrology and inspection, a carrier frequency of the ultrasonic wave incident on the material layer 150 in the first measurement system 100 of FIG. 1 and an external resonance frequency generated by the distance D1 between the ultrasonic transducer 170 and the material layer 150 may be tuned. For example, by finely changing (e.g., tuning) the carrier frequency and controlling the distance D1 for the ultrasonic wave reflected from the 3D nanostructure in the material layer 150 (e.g., by tuning the external resonant frequency), an image having an optimal measurement signal and an optimal resolution may be obtained. The tuning of the carrier frequency and the tuning of the external resonant frequency may be performed in real time.

In the metrology and inspection, the resolution of the measurement signal and the measurement image may be increased through a change in envelope of the ultrasonic pulse radiated to the material layer (e.g., a change in the waveform such as pulse width and height). A method of changing the envelope of the ultrasonic pulse may be useful for detecting minute defects or failures. In one example, in a method of measuring an echo pulse delay from a minute defect, when a first ultrasonic pulse with a relatively narrow envelope width is used as the ultrasonic wave radiated to the material layer, it may be advantageous for increasing the vertical image resolution. Conversely, when using a second ultrasonic pulse with a relatively wide envelope width (e.g., 1/10 of the carrier frequency), it may be advantageous to increase the horizontal image resolution. An ultrasonic pulse of an exponentially decreasing form with respect to time may be used as the ultrasonic wave radiated to the material layer. In one example, the first and second ultrasonic pulses may be radiated sequentially or simultaneously. In one example, the ultrasonic frequency and ultrasonic pulse form to be used in the metrology and inspection may be determined by considering an aperture diameter of the air channel formed in the material layer. For example, if the aperture diameter is narrow, a relatively high frequency ultrasonic wave may be used, and if the aperture diameter is wide, a relatively low frequency ultrasonic wave may be used.

After the metrology and inspection is completed, the substrate on which the material layer is formed may be unloaded from the metrology and inspection apparatus (operation S4).

After unloading, a subsequent process for the material layer is performed according to the metrology and inspection result (operation S5). In one example, the subsequent process may include a process of unloading the substrate from the chamber and then filling the air channel of the material layer with a conductive material.

According to an embodiment of the present disclosure, the measurement systems (e.g., the first measurement system 100, the second measurement system 1700, the third measurement system 1900, the fourth measurement system 2000, etc.) may further include a controller configured to control one or more (e.g., some or all) of the components of the measurement system to perform their respective functions. For example, the controller may control the high-pressure gas supply source 198, the pressure control valve 185, the gas inlet 180, the gas outlet 190, the exhaust device 205, the one or more ultrasonic transducers (e.g., the ultrasonic transducer 170), the temperature control unit 160, etc., to perform their respective functions. For example, the controller may be configured to cause the measurement system to perform the methods describe above (e.g., with reference FIG. 27) and below. According to an embodiment, the controller may be configured to control at least one actuator of the measurement systems to rotate and/or move linearly the substrate holder 130 and/or one or more ultrasonic transducers (e.g., the ultrasonic transducer 170). According to an embodiment, the controller may measure a waveform of an ultrasonic signal reflected and returned, and then may compare the measured result with a simulation or a prepared lookup table, or by inference using a machine learning algorithm, thereby detecting the interface shape of a 3D nanostructure within a material layer and the location and characteristics of a defect. According to an embodiment, the controller may also perform the tuning of the carrier frequency and the tuning of the external resonant frequency in real time.

According to an embodiment of the present disclosure, the controller may include at least one processor and memory storing a computer program. The computer program may be configured to, when executed by the at least one processor, cause the controller to perform its functions.

The disclosure includes, for example, the following non-limiting embodiments based on the descriptions above.

The metrology and inspection apparatus according to an embodiment may include: a first ultrasonic transducer emitting ultrasonic waves to a metrology and inspection target; and
a substrate holder spaced apart from the first ultrasonic transducer and including a surface facing the first ultrasonic transducer,
wherein the first ultrasonic transducer and the substrate holder may be under a high-pressure gas atmosphere higher than atmospheric pressure.

In one example, the first ultrasonic transducer and the substrate holder may be under a gas atmosphere in a range from about 5 atm to about 20 atm.

In one example, the first ultrasonic transducer and the substrate holder may be provided inside a chamber of a high-pressure gas atmosphere.

In one example, the substrate holder is provided inside the chamber of a high-pressure gas atmosphere, and the first ultrasonic transducer may be provided so that an ultrasonic emission surface is exposed to the high-pressure gas atmosphere inside the chamber.

In one example, second and third ultrasonic transducers may further be provided to receive ultrasonic waves reflected from a metrology and inspection target.

In one example, the first ultrasonic transducer may be configured to emit ultrasonic waves incident obliquely on the metrology and inspection target.

In one example, one from among the second and third ultrasonic transducers may be configured to receive ultrasonic waves reflected obliquely from the metrology and inspection target, and the other transducer may be configured to receive ultrasonic waves reflected in a vertical direction from the metrology and inspection target.

In one example, the first to third ultrasonic transducers may be a same distance from the inspection region of the metrology and inspection target.

In one example, the substrate holder may include a plurality of regions into which substrates are loaded.

In one example, the first ultrasonic transducer may be provided in plural.

In one example, the plurality of first ultrasonic transducers may be arranged to form a transducer array.

In one example, the transducer array may include a one-dimensional (1D) or two-dimensional (2D) transducer array.

In one example, the substrate holder may be configured to perform rotational movement and/or straight-line reciprocating movement.

In one example, the transducer array may be configured to perform straight-line reciprocating movement.

In one example, the substrate holder includes a plurality of regions into which the substrate is loaded, and the plurality of first ultrasonic transducers may be provided to correspond one-to-one with the plurality of regions.

In one example, the chamber may further include a high-pressure gas supply source configured to supply a high-pressure gas to the chamber to maintain the pressure inside the chamber at a pressure higher than atmospheric pressure.

In one example, the chamber may further include an exhaust device configured to exhaust the gas supplied to the chamber to the outside of the chamber.

In one example, the chamber may further include a temperature control unit configured to maintain the internal temperature of the chamber at a set temperature while the metrology and inspection for the metrology and inspection target is performed.

In one example, the high-pressure gas atmosphere may include N₂, O₂, H₂, or a mixture gas thereof.

In one example, the first ultrasonic transducer may be embedded in a wall of the chamber facing the substrate holder.

In one example, there may be a step between the ultrasonic emission surface of the first ultrasonic transducer and a wall of the chamber.

In one example, the second and third ultrasonic transducers are further provided to receive ultrasonic waves reflected from the metrology and inspection target, and the second and third ultrasonic transducers may be embedded in the wall of the chamber.

In one example, some of the first to third ultrasonic transducers may be obliquely arranged.

In one example, the first to third ultrasonic transducers are all provided at the same height, and some of the first to third ultrasonic transducers may include a member that changes a path of the ultrasonic waves emitted or received.

A method of manufacturing a semiconductor device according to an embodiment includes:
an operation of forming a material layer including a 3D nanostructure on a substrate;
an operation of loading the substrate on which the material layer is formed into a metrology and inspection apparatus using ultrasonic waves;
an operation of performing metrology and inspection on the material layer;
an operation of unloading the substrate from the metrology and inspection apparatus after performing the metrology and inspection; and
an operation of performing a subsequent process on the material layer,
wherein the metrology and inspection apparatus includes
a first ultrasonic transducer that emits ultrasonic waves to the material layer; and
a substrate holder that faces the first ultrasonic transducer and includes a region into which the substrate is loaded,
wherein the first ultrasonic transducer and the substrate holder are under a high-pressure gas atmosphere higher than atmospheric pressure.

In one example, the operation of forming the material layer may include
an operation of forming a plurality of patterns on the substrate;
an operation of forming an interlayer insulating layer covering the plurality of patterns; and
an operation of forming a 3D nanostructure by removing a portion of the interlayer insulating layer so that a portion of the plurality of patterns is exposed.

In one example, the material layer includes a plurality of regions in which elements are formed, and
in the operation of forming of the 3D nanostructure, a key pattern that may be a reference in the metrology and inspection may be formed between the plurality of regions.

In one example, the operation of performing the metrology and inspection may include
an operation of tuning a carrier frequency of ultrasonic waves radiated to the material layer; and
an operation of tuning a distance between the first ultrasonic transducer and the material layer.

**In** one example, the operation of performing the metrology and inspection includes:
an operation of radiating an ultrasonic pulse to the material layer, and
the operation of radiating the pulse may include
an operation of varying a width of the ultrasonic pulse according to a purpose of the metrology and inspection.

In one example, the operation of radiating the ultrasonic pulse includes
an operation of radiating a first ultrasonic pulse to the material layer for metrology and inspection of a horizontal structure of the material layer, and
an operation of radiating a second ultrasonic pulse to the material layer for metrology and inspection of a vertical structure of the material layer,
wherein the shape of the first ultrasonic pulse may be different from the shape of the second ultrasonic pulse.

In one example, the first ultrasonic pulse and the second ultrasonic pulse may be radiated simultaneously.

In one example, one from among the first and second ultrasonic pulses may be radiated before the other.

In one example, the operation of radiating the ultrasonic pulse may include an operation of radiating an ultrasonic pulse that decreases exponentially.

A method of metrology and inspection according to one embodiment, the method includes
an operation of radiating an ultrasonic pulse to a metrology and inspection target, and
an operation of receiving ultrasonic waves reflected from the metrology and inspection target, and
wherein the operation of radiating the ultrasonic waves and the operation of receiving the ultrasonic waves are performed under a high-pressure gas atmosphere higher than atmospheric pressure.

In one example, the operation of radiating the ultrasonic waves may include
an operation of tuning a carrier frequency of the radiated ultrasonic waves; and
an operation of tuning a distance between an emission surface of the radiated ultrasonic waves and the metrology and inspection target.

In one example, the operation of radiating the ultrasonic waves may include
an operation of radiating the ultrasonic pulse, and
the operation of radiating the ultrasonic pulse may include
an operation of changing a width of the ultrasonic pulse according to a purpose of the metrology and inspection.

In one example, the operation of radiating the ultrasonic pulse includes
an operation of radiating the first ultrasonic pulse to the metrology and inspection target for metrology and inspection of the horizontal structure of the metrology and inspection target; and
an operation of radiating the second ultrasonic pulse to the metrology and inspection target for metrology and inspection of the vertical structure of the metrology and inspection target,
wherein the shape of the first ultrasonic pulse may be different from the shape of the second ultrasonic pulse.
In one example, the operation of radiating the ultrasonic pulse may include an operation of radiating an ultrasonic pulse that decreases exponentially.

According to an embodiment of the disclosure, a metrology and inspection apparatus may be provided and include a substrate holder on which a metrology and inspection target (e.g., a material layer including a 3D structure air channel) is loaded, and a transducer that emits ultrasonic waves to the metrology and inspection target. The substrate holder and the transducer may be placed under a high-pressure gas atmosphere higher than the atmospheric pressure. Therefore, when the metrology and inspection apparatus is used, the metrology and inspection may be performed under a high-pressure gas atmosphere, and thus, the thermoviscous resistance may be reduced during a process in which the ultrasonic waves travel through the air channel of the metrology and inspection target. Accordingly, the attenuation of the ultrasonic waves travelling along the air channel may be reduced, and thus, the signal of the ultrasonic waves reflected from the metrology and inspection apparatus may be increased, and by using ultrasonic waves with different pulse shapes for the horizontal measurement and the vertical measurement, the horizontal and vertical resolutions of the metrology and inspection target may also be increased.

In addition, the ultrasonic attenuation may be reduced as described above, the intensity of the ultrasonic waves emitted from the transducer may be lowered, and accordingly, the operating power of the transducer can be lowered.

It should be understood that embodiments described herein should be considered in a descriptive sense only and not for purposes of limitation. Descriptions of features or aspects within each embodiment of the disclosure should typically be considered as available for other similar features or aspects in other embodiments of the disclosure. While one or more embodiments have been described with reference to the figures, it will be understood by those of ordinary skill in the art that various changes in form and details may be made therein without departing from the scope of the disclosure.

## Claims

1. A metrology and inspection apparatus comprising:
a chamber;
at least one first ultrasonic transducer configured to emit ultrasonic waves to a metrology and inspection target in the chamber; and
a substrate holder in the chamber and spaced apart from all of the at least one first ultrasonic transducer, the substrate holder comprising a surface facing the at least one first ultrasonic transducer, wherein the surface is configured to have the metrology and inspection target thereon,
wherein the chamber is configured to have therein a gas atmosphere having a pressure higher than atmospheric pressure while the at least one first ultrasonic transducer emits the ultrasonic waves to the metrology and inspection target in the chamber.

2. The metrology and inspection apparatus of claim 1, wherein
an ultrasonic emission surface of the at least one first ultrasonic transducer is configured to be exposed to the gas atmosphere inside the chamber.

3. The metrology and inspection apparatus of claim 2, further comprising:
a second ultrasonic transducer and a third ultrasonic transducer,
wherein the second ultrasonic transducer and the third ultrasonic transducer are configured to receive ultrasonic waves reflected from the metrology and inspection target.

4. The metrology and inspection apparatus of claim 2 or 3, wherein the at least one first ultrasonic transducer is a plurality of first ultrasonic transducers.

5. The metrology and inspection apparatus of claim 4, wherein
the plurality of first ultrasonic transducers are arranged in a one-dimensional or two-dimensional transducer array.

6. The metrology and inspection apparatus of claim 5, wherein
the substrate holder comprises a plurality of regions, each of the plurality of regions configured to have a respective substrate loaded thereon, and
the plurality of first ultrasonic transducers face the plurality of regions, respectively.

7. The metrology and inspection apparatus of any of claims 2 to 6, further comprising a gas supply source configured to supply a gas to the chamber to maintain a pressure inside the chamber at the pressure higher than atmospheric pressure.

8. The metrology and inspection apparatus of claim 7, further comprising an exhaust configured to exhaust the gas supplied to the chamber to an outside of the chamber.

9. The metrology and inspection apparatus of claim 8, further comprising a temperature controller configured to maintain an internal temperature of the chamber at a set temperature while metrology and inspection is being performed on the metrology and inspection target in the chamber.

10. The metrology and inspection apparatus of any of claims 7 to 9, wherein the gas of the gas supply source includes at least one from among nitrogen (N₂), oxygen (O₂), and hydrogen (H₂).

11. The metrology and inspection apparatus of any of claims 2 to 10, wherein the at least one first ultrasonic transducer is in a wall of the chamber, the wall facing the substrate holder.

12. The metrology and inspection apparatus of claim 11, further comprising
a second ultrasonic transducer and a third ultrasonic transducer,
wherein the second ultrasonic transducer and the third ultrasonic transducer are configured to receive ultrasonic waves reflected from the metrology and inspection target, and
wherein the second ultrasonic transducer and the third ultrasonic transducer are in the wall of the chamber, and optionally wherein:
the at least one first ultrasonic transducer, the second ultrasonic transducer, and the third ultrasonic transducer are at a same height as each other; and
at least one from among the at least one first ultrasonic transducer, the second ultrasonic transducer, and the third ultrasonic transducer comprises a path changer configured to change a path of the ultrasonic waves emitted or received by the at least one from among the at least one first ultrasonic transducer, the second ultrasonic transducer, and the third ultrasonic transducer.

13. A method of manufacturing a semiconductor device, comprising:
forming a material layer on a substrate, the material layer including a three-dimensional nanostructure;
loading the substrate, on which the material layer is formed, onto a region of a substrate holder of a metrology and inspection apparatus;
performing, while the substrate holder faces towards a first ultrasonic transducer of the metrology and inspection apparatus and the substrate holder is in a gas atmosphere having a pressure higher than atmospheric pressure, a metrology and inspection on the material layer by emitting ultrasonic waves from the first ultrasonic transducer to the material layer;
unloading the substrate from the metrology and inspection apparatus after the metrology and inspection; and
performing a subsequent process on the material layer.

14. The method of claim 13, wherein the forming the material layer comprises:
forming a plurality of patterns on the substrate;
forming an interlayer insulating layer on the plurality of patterns; and
forming a three-dimensional nanostructure by removing a portion of the interlayer insulating layer such that a portion of the plurality of patterns is exposed.

15. The method of claim 13 or 14, wherein the performing the metrology and inspection comprises:
changing a carrier frequency of the ultrasonic waves emitted onto the material layer; and
changing a distance between the first ultrasonic transducer and the material layer.
